Europäisches Patentamt

European Patent Office

Office européen des brevets

(19)

(11) **EP 0 791 192 B1**

(12) **EUROPÄISCHE PATENTSCHRIFT**

(45) Veröffentlichungstag und Bekanntmachung des Hinweises auf die Patenterteilung:
**07.01.1999  Patentblatt 1999/01**

(51) Int Cl.⁶: $G05B\ 13/02$, G06F 7/60

(86) Internationale Anmeldenummer:
**PCT/DE95/01470**

(21) Anmeldenummer: **95935352.5**

(22) Anmeldetag: **23.10.1995**

(87) Internationale Veröffentlichungsnummer:
**WO 96/14608 (17.05.1996 Gazette 1996/22)**

(54) **VERFAHREN ZUM ENTWURF EINES FUZZY-REGLERS**

PROCESS FOR DESIGNING A FUZZY-CONTROLLER

PROCEDE DE MISE AU POINT D'UN REGULATEUR A LOGIQUE FLOUE

(84) Benannte Vertragsstaaten:
**AT BE CH DE ES FR GB IT LI NL SE**

(30) Priorität: **08.11.1994  DE 4439505**

(43) Veröffentlichungstag der Anmeldung:
**27.08.1997  Patentblatt 1997/35**

(73) Patentinhaber: **SIEMENS AKTIENGESELLSCHAFT**
**80333 München (DE)**

(72) Erfinder: **PREUSS, Hans-Peter**
**D-76189 Karlsruhe (DE)**

(56) Entgegenhaltungen:
- **PATENT ABSTRACTS OF JAPAN vol. 017 no. 277 (P-1546) ,27.Mai 1993 & JP,A,05 011809 (TOSHIBA CORP) 22.Januar 1993,**
- **DATABASE INSPEC INSTITUTE OF ELECTRICAL ENGINEERS, STEVENAGE, GB Inspec No. 4681579, WANG L -X 'Training of fuzzy logic systems using nearest neighborhood clustering' & SECOND IEEE INTERNATIONAL CONFERENCE ON FUZZY SYSTEMS (CAT. NO.93CH3136-9), PROCEEDINGS OF IEEE 2ND INTERNATIONAL FUZZY SYSTEMS CONFERENCE, SAN FRANCISCO, CA, USA, 28 MARCH-1 APRIL 1993, ISBN 0-7803-0614-7, 1993, NEW YORK, NY, USA, IEEE, USA, Seiten 13-17 vol.1,**
- **DATABASE INSPEC INSTITUTE OF ELECTRICAL ENGINEERS, STEVENAGE, GB Inspec No. 4507902, IOKIBE T 'Fuzzy clustering method by an arbitrary fuzzy performance function: automatic generation of the fuzzy rule and membership functions' & JAPANESE JOURNAL OF FUZZY THEORY AND SYSTEMS, 1992, USA, Bd. 4, Nr. 2, ISSN 1058-7349, Seiten 207-217,**
- **DATABASE INSPEC INSTITUTE OF ELECTRICAL ENGINEERS, STEVENAGE, GB Inspec No. 4677062, KANG H 'An automated rule design of fuzzy logic controllers for uncertain dynamic systems' & SECOND IEEE INTERNATIONAL CONFERENCE ON FUZZY SYSTEMS (CAT. NO.93CH3136-9), PROCEEDINGS OF IEEE 2ND INTERNATIONAL FUZZY SYSTEMS CONFERENCE, SAN FRANCISCO, CA, USA, 28 MARCH-1 APRIL 1993, ISBN 0-7803-0614-7, 1993, NEW YORK, NY, USA, IEEE, USA, Seiten 261-266 vol.1,**
- **PROCEEDINGS OF THE INTERNATIONAL CONFERENCE ON FUZZY SYSTEMS, SAN FRANCISCO, MAR. 28 - APR. 1, 1993, Bd. 2, 28.März 1993 INSTITUTE OF ELECTRICAL AND ELECTRONICS ENGINEERS, Seiten 1365-1370, XP 000371598 HELLENDOORN H 'DESIGN AND DEVELOPMENT OF FUZZY SYSTEMS AT SIEMENS R&D'**

- AUTOMATIC CONTROL. WORLD CONGRESS 1993. PROCEEDINGS OF THE 12TH TRIENNIAL WORLD CONGRESS OF THE INTERNATIONAL FEDERATION OF AUTOMATIC CONTROL. VOL.3. APPLICATIONS I, PROCEEDINGS OF THE 12TH TRIENNIAL WORLD CONGRESS OF THE INTERNATIONAL FEDERATION OF , ISBN 0-08-042214-4, 1994, OXFORD, UK, PERGAMON, UK, Seiten 29-34, VACHTSEVANOS G 'Idle speed control of an automotive engine using a systematic fuzzy logic methodology'

**Beschreibung**

Die Erfindung betrifft ein Verfahren zum Entwurf eines Fuzzy-Reglers nach dem aus dem Artikel von T. IOKIBE, Fuzzy clustering method, Japanese Journal of Fuzzy Theory and systems, 1992, USA, vol. 4, no. 2, pp. 207-217 vorbekannten Oberbegriff des Anspruchs 1.

Die Grundlagen der Fuzzy-Regler sind z. B. aus dem Aufsatz "Fuzzy Control - heuristische Regelung mittels unscharfer Logik" von Hans-Peter Preuß, veröffentlicht in "atp" (1992) 4, Seiten 176 bis 183, und "atp" (1992) 5, Seiten 239 bis 246, bekannt. Die dort beschriebenen Fuzzy-Regler werden zur Regelung, Steuerung, Prozeßoptimierung sowie für heuristische Strategien mit den Mitteln der Fuzzy-Logik eingesetzt. In einer Fuzzy-Regelung kann die Anzahl der Ein- und Ausgangsgrößen des Fuzzy-Reglers grundsätzlich beliebig sein. Zum Entwurf eines Fuzzy-Reglers werden zunächst die numerischen Wertebereiche der Ein- und Ausgangsgrößen durch linguistische Werte, wie "klein", "mittel" oder "groß", qualitativ charakterisiert. Jeder linguistische Wert wird durch eine Zugehörigkeitsfunktion beschrieben. Diese quantifiziert die qualitative Aussage eines linguistischen Wertes in der Weise, daß sie einen Wahrheitswert für jeden auftretenden zahlenmäßigen Wert einer Prozeßgröße angibt. Durch diesen Vorgang, der auch als Fuzzifizierung bezeichnet wird, wird der Betriebsbereich des betrachteten Prozesses in "unscharfe" Teilbereiche unterteilt. Die Anzahl der Teilbereiche entspricht der Anzahl linguistischer Werte einer Eingangsgröße, bei mehreren Eingangsgrößen der Anzahl der Kombinationsmöglichkeiten von linguistischen Werten verschiedener Eingangsgrößen. Für jeden dieser Teilbereiche oder auch zusammengefaßt für mehrere Teilbereiche wird die Regelungsstrategie durch WENN-DANN-Regeln bestimmt. Diese Regeln werden in einer Regelbasis hinterlegt. In jeder Regel wird für eine Kombination von linguistischen Werten der Eingangsgrößen, z. B. durch eine Verknüpfung mit den Operatoren "UND" oder "ODER", im Bedingungsteil eine Folgerung als linguistischer Wert für jeweils eine der Ausgangsgrößen bestimmt. Zur Berechnung der Wahrheitswerte der Bedingungsteile werden die aus den Zugehörigkeitsfunktionen der einzelnen Eingangsgrößen ermittelten Wahrheitswerte entsprechend den in den Regeln verwendeten Operatoren verknüpft. In der als Inferenz bezeichneten Berechnung der Folgerungen der einzelnen Regeln wird beispielsweise die in einer Regel durch den entsprechenden linguistischen Wert benannte Zugehörigkeitsfunktion der Ausgangsgröße auf den Wahrheitswert begrenzt, den der Bedingungsteil der Regel liefert. Vor der sogenannten Komposition werden die Wirkungen der Regeln bezüglich einer Ausgangsgröße einander überlagert, z. B. durch eine Maximalwertbildung aller Zugehörigkeitsfunktionen der Ausgangsgröße. Zum Schluß erfolgt die als Defuzzifizierung bezeichnete Berechnung des Wertes der Ausgangsgröße. Dies geschieht z. B. durch Berechnung der Lage des Schwerpunktes der von allen begrenzten Zugehörigkeitsfunktionen eingeschlossenen Fläche über dem Wertebereich der Ausgangsgröße.

Das dort beschriebene Entwurfsverfahren, insbesondere die Formulierung der Regelbasis unter Verwendung linguistischer Werte, setzt ausreichendes Prozeßwissen oder Operatorerfahrung mit manueller Fahrweise voraus. Selbst wenn dieses vorhanden ist, stellt es sich oftmals als schwierig dar, Operatorerfahrung in einfach zu handhabende Fuzzy-Regeln zu übersetzen.

Der Erfindung liegt die Aufgabe zugrunde, ein Entwurfsverfahren für einen Fuzzy-Regler zu finden, das ohne die obengenannten Beschränkungen anwendbar ist und bei dem insbesondere die Regelbasis aufgestellt wird, ohne daß Prozeßwissen oder Operatorerfahrung in Fuzzy-Regeln übersetzt werden müssen.

Zur Lösung dieser Aufgabe weisen neue Verfahren der eingangs genannten Art die in den kennzeichnenden Teilen der Ansprüche 1 oder 3 genannten Merkmale auf. Vorteilhafte Weiterbildungen der Erfindung sind in den Unteransprüchen 2 und 4 bis 8 angegeben. Mit den neuen Entwurfsverfahren ist erfindungsgemäß nach Anspruch 9 ein Fuzzy-Regler erhältlich, der im Regelkreis ein Verhalten ähnlich dem eines erfahrenen Operators aufweist.

Das erfindungsgemäße Entwurfsverfahren hat den Vorteil, daß es ein selbsttätiges Lernen der Fuzzy-Regeln ohne Einsatz von Expertenwissen ermöglicht. Das Verfahren ist, falls gewünscht, ohne jegliche Bedienervorgaben anwendbar. Lediglich die Lerndaten der Ein- und Ausgangsgrößen müssen vom Anwender bereitgestellt werden. Das Verfahren bietet sich vor allem dann an, wenn ein Fuzzy-Regler zum Einsatz kommen soll, obwohl die Operatorerfahrung unzureichend oder nicht explizit zugänglich ist. In diesem Fall ist das Verfahren zum Entwurf eines Fuzzy-Reglers auf der Basis von Lerndaten vorteilhaft. Das Verfahren kann auf einer üblichen Datenverarbeitungsanlage durchgeführt werden. Durch die Clusterung werden die Anzahl und die Positionen der Zugehörigkeitsfunktionen jeder Ein- oder Ausgangsgröße automatisch aus der Verteilung der Lerndaten ermittelt. Diese Klassifizierung ist ihrerseits "unscharf" und deshalb in der Lage, auch in Bereichen ohne ausreichende Lerndaten angemessen zu interpolieren. Es ist aber auch möglich, einen selbstlernenden Fuzzy-Regler zu erhalten, indem ein Fuzzy-Regler um eine Einrichtung zur Durchführung des Verfahrens erweitert wird.

Anhand der Zeichnungen, in denen Ausführungsbeispiele der Erfindung dargestellt sind, werden im folgenden die Erfindung sowie Ausgestaltungen und Vorteile näher erläutert.

Es zeigen:

Figur 1     ein System mit zwei Eingängen und einem Ausgang,

Figur 2     Registerwerte für einen linguistischen Wert K der Ausgangsgröße y,

Figur 3    Registerwerte für einen linguistischen Wert G der Ausgangsgröße y,

Figur 4    ein Regelwerk eines Fuzzy-Reglers in Matrixschreibweise und

Figuren 5 und 6    ein Entwurfsverfahren nach einer MIN/MAX-Methode.

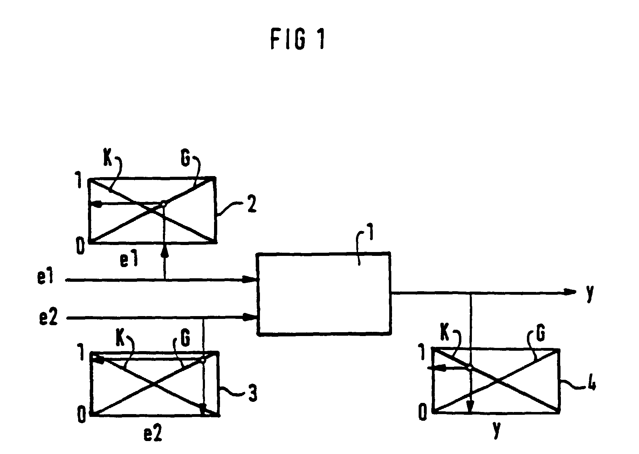

In Figur 1 ist ein Funktionsblock 1 mit zwei Eingangsgrößen, nämlich einer Regelabweichung e1 und deren Ableitung e2, sowie einer Ausgangsgröße y dargestellt. Weiterhin sind in Diagrammen 2, 3 und 4 Zugehörigkeitsfunktionen der Größen e1, e2 bzw. y dargestellt. Linguistische Werte sind jeweils K (klein) und G (groß), denen die Zugehörigkeitsfunktionen in den Diagrammen 2, 3 und 4 zugeordnet sind. Der auf den Abszissen der Diagramme 2, 3 und 4 aufgetragene Wertebereich entspricht dabei jeweils dem Wertebereich der Größen e1, e2 bzw. y. An den Ordinaten ist der Wertebereich der Wahrheitswerte von 0 bis 1 angegeben. Zum Entwurf eines Fuzzy-Systems werden zunächst durch eine nicht dargestellte Meßeinrichtung die Signalverläufe der Eingangsgrößen e1 und e2 sowie der Ausgangsgröße y aufgenommen und als diskrete Meßwerte abgespeichert. Die auszuwertenden Signalverläufe können einem Modellregelkreis entstammen oder Meßwerte sein, welche bei Operatorbetrieb gemessen wurden. Auch die Nachbildung konventioneller Regler durch einen Fuzzy-Regler kann in dieser Weise angegangen werden.

Durch Clusterung der Lerndaten werden sämtliche Zugehörigkeitsfunktionen auf den Häufungspunkten der Lerndaten positioniert. Auch die Anzahl der Zugehörigkeitsfunktionen je Ein- und Ausgangsgröße kann als Ergebnis der Clusterung erhalten werden. Ihre Höchstzahl kann bei Bedarf vorgegeben werden. Die Clusterung erfolgt eindimensional, d. h. für jede Ein- und Ausgangsgröße unabhängig von den übrigen. Bei der mehrdimensionalen Clusterung kann es vorkommen, daß getrennte mehrdimensionale Schwerpunkte bei einer ersten Ein- oder Ausgangsgröße zu beabstandeten eindimensionalen Schwerpunkten, bei einer zweiten Ein- oder Ausgangsgröße aber zu sehr eng zusammenliegenden eindimensionalen Schwerpunkten führen. Dadurch würde die Zahl der erforderlichen zugehörigkeitsfunktionen unnötig erhöht werden. Das wird vorteilhaft durch die eindimensionale Clusterung vermieden. Zudem können ähnliche Clusterzentren zusammengefaßt werden.

Zur Clusterung wird von zwei fixierten Randclustern und einer vorgegebenen Anzahl freier, zunächst äquidistanter Clusterzentren auf dem Wertebereich einer Ein- oder Ausgangsgröße ausgegangen. Dreieckige Zugehörigkeitsfunktionen werden derart positioniert, daß die Spitzen der Dreiecke über den Clusterzentren und die Fußpunkte in den benachbarten Clusterzentren liegen.

In einem iterativen Verfahren werden nacheinander die Lerndaten dem nächstgelegenen Clusterzentrum zugeordnet und der Schwerpunkt aller zu diesem Clusterzentrum gehörenden, bereits bearbeiteten Datenpunkte ermittelt. Der so berechnete Schwerpunkt wird bei der Bearbeitung des nächsten Datenpunktes als neues Clusterzentrum verwendet. Die Zugehörigkeitsfunktionen werden, wie oben beschrieben, durch die erhaltenen Clusterzentren festgelegt.

Daraufhin werden für jedes Meßwertetripel, bestehend aus jeweils einem Meßwert der Eingangsgröße e1, e2 und der Ausgangsgröße y, die Wahrheitswerte der angesprochenen Zugehörigkeitsfunktionen für die linguistischen Werte K und G ermittelt und festgestellt, welcher dominant ist, d. h. welcher linguistische Wert einen größeren Wahrheitswert hat als die Wahrheitswerte der übrigen linguistischen Werte derselben Ein- oder Ausgangsgröße. In dem Ausführungsbeispiel nach Figur 1 beträgt der Wahrheitswert des linguistischen Wertes G für die Eingangsgröße e1 etwa 0,6 und der Wahrheitswert des linguistischen Wertes K etwa 0,4. Demgemäß liegt der Meßwert in einem Teilbereich, in dem der linguistische Wert G dominant ist. Der Wahrheitswert des linguistischen Wertes G für die Eingangsgröße e2 ist mit etwa 0,9 ebenfalls größer als der Wahrheitswert 0,1 des linguistischen Wertes K, so daß dieser ebenfalls in einem Teilbereich liegt, in dem der linguistische Wert G dominant ist. Dagegen ist der Wahrheitswert 0,7 des linguistischen Wertes K der Ausgangsgröße y größer als der Wahrheitswert 0,3 des linguistischen Wertes G, so daß der Meßwert der Ausgangsgröße y in einem Teilbereich liegt, in dem der linguistische Wert K dominiert.

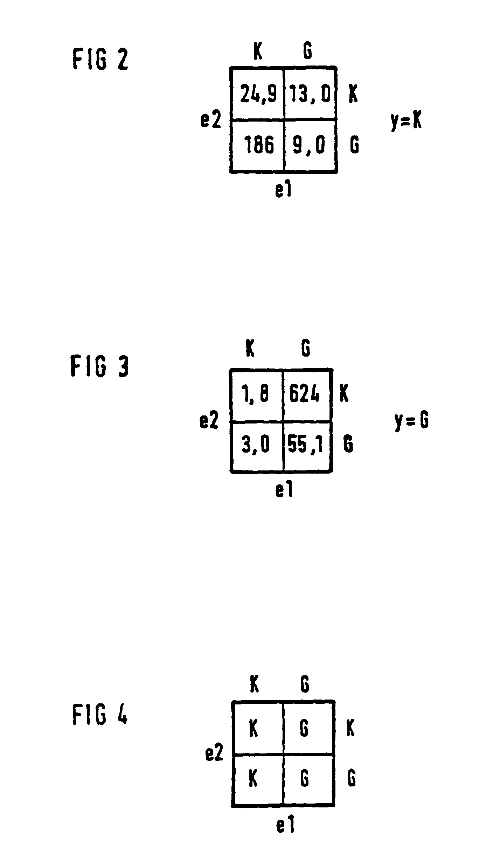

Zur Auswertung der Meßwerte sind für jede Kombinationsmöglichkeit der Teilbereiche der Ein- und Ausgangsgrößen Register eines Speichers vorgesehen. Bei dem Ausführungsbeispiel nach Figur 1 sind dies acht Register für acht Kombinationsmöglichkeiten, entsprechend den Matrizenfeldern in den Figuren 2 und 3. Die Matrizenfelder in der Figur 2 sind den Kombinationsmöglichkeiten zugeordnet, in denen der linguistische Wert K der Ausgangsgröße y dominant ist. Figur 3 zeigt die Matrizenfelder für den dominanten linguistischen Wert G. In einer Auswertungsphase wird nun entsprechend den nach Figur 1 ermittelten Wahrheitswerten in der Matrix nach Figur 2 für einen dominanten linguistischen Wert K der Ausgangsgröße y der Wert, der in dem Matrixfeld eines dominanten linguistischen Wertes G für die Eingangsgrößen e1 und e2 einzutragen ist, um einen Betrag auf 9,0 erhöht. Vorzugsweise wird dieser Betrag gleich dem Wahrheitswert 0,7 des linguistischen Wertes K der Ausgangsgröße y gewählt. Alternativ kann das Maximum aus dem aktuellen Wahrheitswert und dem momentanen Eintrag gebildet werden, wodurch sich eine Unabhängigkeit von der Anzahl gleicher oder ähnlicher Werte erreichen läßt.

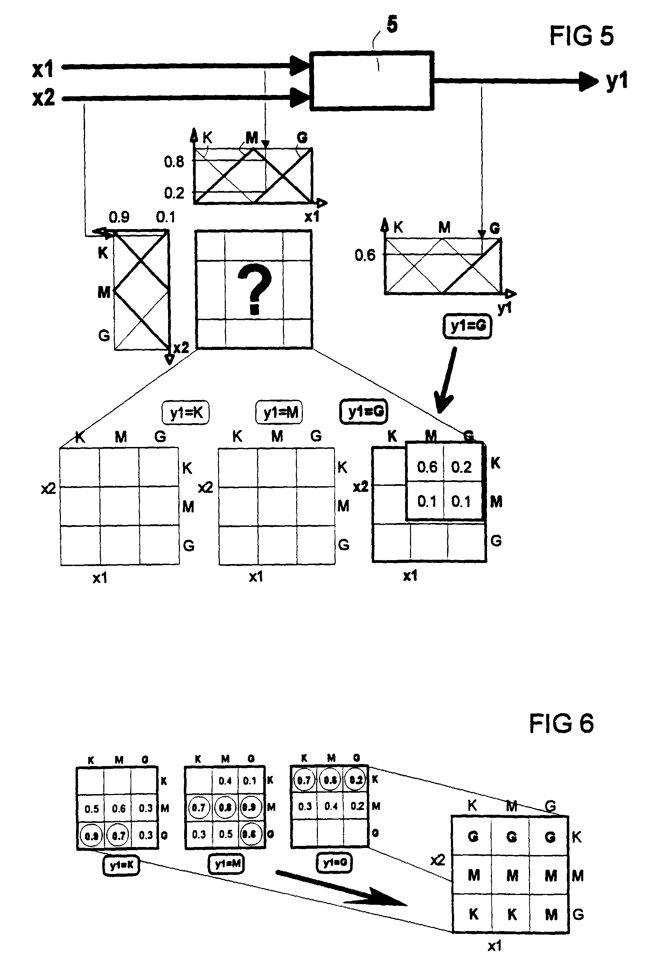

Die in den Matrixfeldern der Figuren 2 und 3 eingetragenen Werte stellen nun bereits das Ergebnis nach der Auswertung einer Reihe von Meßwertetripeln dar. In einer Synthese gelangt man zur Matrixdarstellung eines Regelwerks nach Figur 4, indem derjenige linguistische Wert der Ausgangsgröße y in die Matrixfelder eingetragen wird, der in der Auswertungsphase den größten Wert beim Vergleich der Matrizen nach Figur 2 und 3 ergeben hat. Beispielsweise ist der Wert 55,1 in dem Matrixfeld in Figur 3 für den linguistischen Wert G der Eingangsgrößen e1 und e2 sowie der Ausgangsgröße y größer als der Wert 9,0 in dem dazu korrespondierenden Matrixfeld für den linguistischen Wert G der beiden Eingangsgrößen e1 und e2 und für den linguistischen Wert K der Ausgangsgröße y, so daß in dem entsprechenden Matrixfeld in Figur 4 für den linguistischen Wert G der beiden Eingangsgrößen e1 und e2 der linguistische Wert G der Ausgangsgröße y einzutragen ist. Die beiden Regeln des Regelwerks nach Figur 4 können folgendermaßen formuliert werden:

WENN (e1 = K) DANN (y = K)

und

WENN (e1 = G) DANN (y = G).

Bei dem bisher beschriebenen Entwurfsverfahren wurden zur Bestimmung der Registerinhalte lediglich die bei den jeweiligen Meßwertetripeln dominanten Zugehörigkeitsfunktionen berücksichtigt. Anhand der Figuren 5 und 6 soll ein Entwurfsverfahren nach einer MIN/MAX-Methode beschrieben werden, bei welchem auch die benachbarten linguistischen Werte mit geringerem Wahrheitswert berücksichtigt werden. Dies steigert die Modellierungsgüte der Fuzzy-Beschreibung.

Ein Fuzzy-Regler 5 hat in Figur 5 zwei Eingangsgrößen x1 und x2 sowie eine Ausgangsgröße y1. Für die Eingangsgrößen x1, x2 und die Ausgangsgröße y1 gibt es jeweils drei Zugehörigkeitsfunktionen für die linguistischen Werte K (klein), M (mittel) und G (groß). Anhand der Figur 5 werden die Eintragungen in die Register für ein Meßwertetripel erläutert. Eintragungen werden nur in Registerzellen für den linguistischen Wert der Ausgangsgröße vorgenommen, der aufgrund des Meßwerts für die Ausgangsgröße y1 den größten Wahrheitswert erhält. In diesem Beispiel ist es der linguistische Wert G der Ausgangsgröße y1 mit dem Wahrheitswert 0,6 (rechtes Diagramm in Figur 5). Entsprechend einer UND-Verknüpfung wird das Minimum der Wahrheitswerte der Eingangsgrößen x1, x2 und der Ausgangsgröße y1 in die entsprechende Registerzelle eingetragen. In dem dargestellten Beispiel liefert der Meßwert der Eingangsgröße x1 für den linguistischen Wert M den Wahrheitswert 0,8, die Eingangsgröße x2 für den linguistischen Wert K den Wahrheitswert 0,9 und die Ausgangsgröße y1 für den linguistischen Wert G den Wahrheitswert 0,6. Das Minimum der Wahrheitswerte beträgt 0,6 und wird in die Registerzelle für x1 = M, x2 = K und y1 = G eingetragen (Matrix rechts unten in Figur 5). Auch benachbarte Zugehörigkeitsfunktionen, die einen geringeren Wahrheitswert liefern, werden bei den Eingangsgrößen x1 und x2 berücksichtigt. Daher erfolgt auch ein Eintrag in das Register für die Kombinationsmöglichkeit x1 = G, x2 = K und y1 = G. Als kleinsten Wahrheitswert liefert hier die Zugehörigkeitsfunktion für den linguistischen Wert G der Eingangsgröße x1 den Wert 0,2, der in das entsprechende Register eingetragen wird. Die beiden Einträge mit dem Wert 0,1 in der Matrix für y1 = G werden aufgrund des Wahrheitswertes 0,1 des linguistischen Wertes M der Eingangsgröße x2, der für die beiden übrigen Kombinationsmöglichkeiten den kleinsten Wahrheitswert liefert, erhalten. Auf diese Weise werden durch Auswertung eines Meßwertetripels bereits vier Einträge gewonnen. Einträge erfolgen allerdings nur dann, wenn das ermittelte Minimum der einzelnen Wahrheitswerte größer als der bisher eingetragene Wert ist. In dem Beispiel nach Figur 5 war dies für jedes Register der Fall, da vor der Bearbeitung des Meßwertetripels alle Register leer waren. Diese Maximumbildung entspricht einer ODER-Verknüpfung der durch die Minimumbildung gewonnenen Wahrheitswerte.

Figur 6 zeigt als Ergebnis der Auswertung aller Meßwertetripel drei Matrizen für die linguistischen Werte K, M und G der Ausgangsgröße y1 mit den gewonnenen Einträgen in den Registern. Die Felder derjenigen Register, die für die jeweiligen Kombinationsmöglichkeiten der Eingangsgrößen x1 und x2 den größten Wahrheitswert erhalten haben, sind durch Kreise markiert. Zur Aufstellung der in Figur 6 ebenfalls dargestellten Regelmatrix werden den Kombinationsmöglichkeiten der Eingangsgrößen x1 und x2 direkt die linguistischen Werte K, M oder G, welche aufgrund dieser Auswertung die maximale Relevanz haben, zugeordnet. Anhand der Regelmatrix können nun die Elementarregeln aufgestellt werden. Eine Elementarregel lautet beispielsweise:

WENN ((x1 = K) UND (x2 = K)) DANN (y1 = G).

Für drei Kombinationsmöglichkeiten der Eingangsgrößen x1 und x2 werden Elementarregeln erhalten, die im Folgerungsteil den linguistischen Wert G aufweisen. Diese Elementarregeln können durch Verknüpfung ihrer Bedingungsteile nach Art einer ODER-Verknüpfung zu einer kompakten, geklammerten Regel zusammengefaßt werden. Diese lautet dann:

WENN (x2 = K) DANN (y1 = G).

Das Bilden kompakter Regeln aus der Vielzahl von Elementarregeln hat den Vorteil, daß bei gleicher Anzahl von Regeln eine größere Menge von Eingangsgrößen bearbeitet werden kann. Damit sind bei gleichem Umfang des Regelwerks größere Fuzzy-Regler realisierbar. Wenn die Anzahl der Regeln des Regelvorgangs dennoch einen vorgegebenen Maximalwert übersteigt, kann durch einen Neustart des Lernvorgangs mit reduzierten Maximalzahlen der Zugehörigkeitsfunktionen sichergestellt werden, daß die erzeugten Regeln den maximal zulässigen Umfang nicht überschreiten.

In diesem Ausführungsbeispiel wurden nur die dominanten linguistischen Werte der Ausgangsgröße y1 für die Ermittlung und den Eintrag des minimalen Wahrheitswertes einer Kombinationsmöglichkeit aller Größen berücksichtigt. Das bedeutet eine Vereinfachung des Verfahrens ohne nennenswerte Qualitätseinbuße. Es ist aber ohne weiteres auch möglich, benachbarte linguistische Werte, die bei einem Stützwert einen geringeren Wahrheitswert für die Ausgangsgröße y1 liefern, ebenfalls in das Verfahren einzubeziehen.

In einer anschließenden Testphase können durch den Fuzzy-Regler mit diesem Regelwerk und den in Figur 5 gezeigten Zugehörigkeitsfunktionen berechnete Ausgangsgrößen mit den gemessenen Ausgangsgrößen verglichen werden. Falls vorgegebene Genauigkeitsanforderungen dabei nicht erfüllt werden, besteht die Möglichkeit, in einer erneuten Lernphase weitere Meßwerte zu ermitteln und mit denselben vorgegebenen Zugehörigkeitsfunktionen die Auswertungsphase und Synthese zu wiederholen oder aber durch Variation der Vorgaben, z. B. der Form oder der Anzahl der Zugehörigkeitsfunktionen für Ein- oder Ausgangsgrößen, eine weitere Verbesserung des Fuzzy-Reglers zu versuchen. In einer vorteilhaften Ausführungsform werden nur die Zugehörigkeitsfunktionen der Ausgangsgrößen nachoptimiert und als Zielfunktion einer numerischen Optimierung die Summe der Quadrate der Abweichungen minimiert.

## Patentansprüche

1. Verfahren zum Entwurf eines Fuzzy-Reglers

- mit mindestens einer Ein- und Ausgangsgröße (e1, e2, y),
- mit einer Einrichtung zur Fuzzifizierung, in welcher Wahrheitswerte linguistischer Werte (K, G) für die Eingangsgrößen (e1, e2) ermittelt werden,
- mit einem Regelwerk, in welchem für Kombinationen linguistischer Werte (K, G) der Eingangsgrößen (e1, e2) als Folgerung linguistische Werte (K, G) der Ausgangsgrößen (y) bestimmt werden, und
- mit einer Einrichtung zur Defuzzifizierung, in welcher entsprechend den Wahrheitswerten der linguistischen Werte (K, G) der Ausgangsgrößen (y) die Werte der Ausgangsgrößen (y) bestimmt werden,

- wobei in einer Lernphase auftretende Wertekombinationen der Ein- und Ausgangsgrößen (e1, e2, y) gemessen werden und
- durch eine Clusterung Zugehörigkeitsfunktionen für die linguistischen Werte (K, G) auf den Häufungspunkten der gemessenen Lerndaten positioniert werden,

**dadurch gekennzeichnet,**

- daß in einer Auswertungsphase für Teilbereiche, in welchen die einzelnen linguistischen Werte (K, G) dominant sind, d. h. in welchen der Wahrheitswert eines linguistischen Wertes (K, G) größer als die Wahrheitswerte der übrigen linguistischen Werte (G, K) derselben Ein- oder Ausgangsgröße (e1, e2, y) ist, für jeden linguistischen Wert (K, G) einer Ausgangsgröße (y) ein jeder Kombinationsmöglichkeit der Teilbereiche der verschiedenen Eingangsgrößen (e1, e2) zugeordneter Registerinhalt eines Speichers immer dann um einen Betrag erhöht wird, wenn eine gemessene Wertekombination der Ein- und Ausgangsgrößen (e1, e2, y) in die Teilbereiche dieser Kombinationsmöglichkeit fällt, und
- daß in einer Synthese die Elementarregeln des Regelwerks mit den einzelnen Kombinationsmöglichkeiten im Bedingungteil bestimmt werden, indem derjenige linguistische Wert (K, G) der Ausgangsgröße (y) mit dem größten Registerinhalt als Folgerung der Regel gewählt wird.

2. Verfahren nach Anspruch 1, **dadurch gekennzeichnet,**

- daß der Betrag der Erhöhung des Registerinhalts gleich dem Wahrheitswert des dominanten linguistischen Wertes (K, G) für die jeweilige Ausgangsgröße (y) gesetzt oder durch Maximalwertauswahl erhalten wird.

3. Verfahren zum Entwurf eines Fuzzy-Reglers

- mit mindestens einer Ein- und Ausgangsgröße (x1, x2, y1),
- mit einer Einrichtung zur Fuzzifizierung, in welcher Wahrheitswerte linguistischer Werte (K, M, G) für die Eingangsgrößen (x1, x2) ermittelt werden,
- mit einem Regelwerk, in welchem für Kombinationen linguistischer Werte (K, M, G) der Eingangsgrößen (x1, x2) als Folgerung linguistische Werte (K, M, G) der Ausgangsgrößen (y1) bestimmt werden, und
- mit einer Einrichtung zur Defuzzifizierung, in welcher entsprechend den Wahrheitswerten der linguistischen Werte (K, M, G) der Ausgangsgrößen (y1) die Werte der Ausgangsgrößen (y1) bestimmt werden,

- wobei in einer Lernphase auftretende Wertekombinationen der Ein- und Ausgangsgrößen (x1, x2, y1) gemessen werden und

- durch eine Clusterung Zugehörigkeitsfunktionen für die linguistischen Werte (K, M, G) auf den Häufungspunkten der gemessenen Lerndaten positioniert werden,

**dadurch gekennzeichnet,**

- daß in einer Auswertungsphase für Teilbereiche, in welchen die einzelnen linguistischen Werte (K, M, G) dominant sind, d. h. in welchen der Wahrheitswert eines linguistischen Wertes (K, M, G) größer als die Wahrheitswerte der übrigen linguistischen Werte derselben Ein- oder Ausgangsgröße (x1, x2, y1) ist, für jeden dominanten linguistischen Wert (K, M, G) einer Ausgangsgröße (y1) ein jeder Kombinationsmöglichkeit der Teilbereiche der verschiedenen Eingangsgrößen (x1, x2) zugeordneter Registerinhalt eines Speichers mit dem Minimum der Wahrheitswerte der linguistischen Werte (K, M, G) dieser Kombination belegt wird, wenn das Minimum größer als der bisher eingetragene Wert ist, und

- daß in einer Synthese die Elementarregeln des Regelwerks mit den einzelnen Kombinationsmöglichkeiten im Bedingungsteil bestimmt werden, indem derjenige linguistische Wert (K, M, G) der Ausgangsgröße (y1) mit dem größten Registerinhalt als Folgerung der Regel gewählt wird.

4. Verfahren nach einem der vorhergehenden Ansprüche, **dadurch gekennzeichnet,**

- daß die Clusterung eindimensional erfolgt.

5. Verfahren nach Anspruch 4, **dadurch gekennzeichnet,**

- daß zur Clusterung von zwei fixierten Randclustern und einer vorgegebenen Anzahl freier, zunächst äquidistanter Clusterzentren auf dem Wertebereich einer Eingangsgröße (e1, e2, x1, x2) oder Ausgangsgröße (y, y1) ausgegangen wird,

- daß dreieckige Zugehörigkeitsfunktionen derart positioniert werden, daß die Spitzen der Dreiecke über den Clusterzentren und die Fußpunkte in den benachbarten Clusterzentren liegen,

- daß in einem iterativen Verfahren die Lerndaten nacheinander dem nächstgelegenen Clusterzentrum zugeordnet und der Schwerpunkt aller zu diesem Clusterzentrum gehörenden, bereits bearbeiteten Datenpunkte ermittelt wird und

- daß der so berechnete Schwerpunkt bei der Bearbeitung des nächsten Datenpunktes als neues Clusterzentrum verwendet wird.

6. Verfahren nach einem der vorhergehenden Ansprüche, **dadurch gekennzeichnet,**

- daß die bei der Synthese erhaltenen Elementarregeln mit gleichem Folgerungsteil durch Verknüpfung ihrer Bedingungsteile nach Art einer ODER-Verknüpfung zu einer kompakten Regel zusammengefaßt werden.

7. Verfahren nach einem der vorhergehenden Ansprüche, **dadurch gekennzeichnet,**

- daß in einer Testphase durch den Fuzzy-Regler berechnete Ausgangsgrößen mit gemessenen Ausgangsgrößen (y) verglichen werden und

- daß eine Nachoptimierung mit variierter Zahl der linguistischen Werte (K, G) oder variierter Form der Zugehörigkeitsfunktionen durchgeführt wird, wenn die Abweichungen einen vorgegebenen Grenzwert überschreiten.

8. Verfahren nach Anspruch 7, **dadurch gekennzeichnet,**

- daß nur die Zugehörigkeitsfunktionen der Ausgangsgrößen (y, y1) nachoptimiert werden und

- daß als Zielfunktion einer numerischen Optimierung die Summe der Quadrate der Abweichungen minimiert wird.

9. Fuzzy-Regler, der eine Einrichtung zur Durchführung des Verfahrens nach einem der vorhergehenden Ansprüche enthält.

**Claims**

1. Process for the design of a fuzzy controller

- having at least one input and output variable (e1, e2, y),

- having a device for fuzzification, in which truth values of linguistic values (K, G) are determined for the input variables (e1, e2),

- having a set of rules, in which linguistic values (K, G) of the output variables (y) are determined for combinations of linguistic values (K, G) of the input variables (e1, e2) as an implication, and

- having a device for defuzzification, in which the values of the output variables (y) are determined according to the truth values of the linguistic values (K, G) of the output variables (y),
- whereby value combinations of the input and output variables (e1, e2, y), which occur in a learning phase, are measured, and
- by a clustering operation, membership functions for the linguistic values (K, G) are positioned on the cluster points of the measured learning data,

characterised in that

- in an evaluation phase for partial ranges, in which the individual linguistic values (K, G) are dominant, that is to say in which the truth value of a linguistic value (K, G) is greater than the truth values of the remaining linguistic values (G, K) of the same input or output variable (e1, e2, y), for each linguistic value (K, G) of an output variable (y) the register contents of a memory allocated to each combination of the partial ranges of the various input variables (e1, e2) are always increased by an amount when a measured value combination of the input and output variables (e1, e2, y) falls within the partial ranges of this combination, and that
- in a synthesis, the elementary rules of the set of rules are determined with the individual combinations in the conditional part by selecting the linguistic value (K, G) of the output variable (y) having the maximum register contents as the implication of the rule.

2. Process according to Claim 1, characterised in that

- the amount of the increase in the register contents is made equal to the truth value of the dominant linguistic value (K, G) for the respective output variable (y), or is obtained by selecting the maximum value.

3. Process for the design of a fuzzy controller

- having at least one input and output variable (x1, x2, y1),
- having a device for fuzzification, in which truth values of linguistic values (K, M, G) are determined for the input variables (x1, x2),
- having a set of rules, in which linguistic values (K, G, M, G) of the output variables (y1) are determined for combinations of linguistic values (K, M, G) of the input variables (x1, x2) as an implication, and
- having a device for defuzzification, in which the values of the output variables (y1) are determined according to the truth values of the linguistic values (K, M, G) of the output variables (y1),
- whereby value combinations of the input and output variables (x1, x2, y1), which occur in a learning phase, are measured, and
- by a clustering operation, membership functions for the linguistic values (K, M, G) are positioned on the cluster points of the measured learning data,

characterised in that

- in an evaluation phase for partial ranges, in which the individual linguistic values (K, M, G) are dominant, that is to say in which the truth value of a linguistic value (K, M, G) is greater than the truth values of the remaining linguistic values of the same input or output variable (x1, x2, y1), for each dominant linguistic value (K, M, G) of an output variable (y1) the register contents of a memory allocated to each combination of the partial ranges of the various input variables (x1, x2) are the minimum of the truth values of the linguistic values (K, M, G) of this combination if the minimum is greater than the previously entered value, and that
- in a synthesis, the elementary rules of the set of rules are determined with the individual combinations in the conditional part by selecting the linguistic value (K, M, G) of the output variable (y1) having the maximum register contents as the implication of the rule.

4. Process according to one of the preceding Claims, characterised in that

- the clustering is one dimensional.

5. Process according to Claim 4, characterised in that

- two fixed edge clusters and a predetermined number of free, initially equidistant cluster centres on the value range of an input variable (e1, e2, x1, x2) or output variable (y, y1) are assumed for clustering, and that
- triangular membership functions are positioned so that the apexes of the triangles lie above the cluster centres and the bases lie in the adjacent cluster centres, and that
- the learning data are allocated to the nearest cluster centre one after the other in an iterative process and the centre of gravity of all data points belonging to this cluster centre and already processed is determined, and that
- the centre of gravity calculated in this manner is used as the new cluster centre during the processing of the next data point.

6. Process according to one of the preceding Claims, characterised in that

- the elementary rules having the same implication part and obtained in the synthesis can be combined into one compact rule by linking their conditional parts in the form of an OR operation.

7. Process according to one of the preceding Claims, characterised in that

- in a test phase, output variables calculated by the fuzzy controller are compared to the measured output variables (y), and that
- a re-optimization operation with a changed number of linguistic values (K, G) or changed form of the membership functions is carried out if the deviations exceed a predetermined limiting value.

8. Process according to Claim 7, characterised in that

- only the membership functions of the output variables (y, y1) are re-optimized, and that
- the sum of the squares of the deviation is minimized as the objective function of a numerical optimization operation.

9. Fuzzy controller, which contains a device for implementing the process according to one of the preceding Claims.

**Revendications**

1. Procédé de conception d'un régulateur à logique floue

- comportant au moins une grandeur (e1, e2) d'entrée et une grandeur (y) de sortie,
- comportant un dispositif pour le traitement par logique floue, dans lequel des valeurs de vérité de valeurs (K, G) linguistiques sont déterminées pour les grandeurs (e1, e2) d'entrée,
- comportant un système de régulation dans lequel, pour des combinaisons de valeurs (K, G) linguistiques des grandeurs (e1, e2) d'entrée, des valeurs (K, G) linguistiques des grandeurs (y) de sortie sont déterminées comme déduction, et
- comportant un dispositif pour l'éclaircissement, dans lequel les valeurs des grandeurs (y) de sortie sont déterminées suivant les valeurs de vérité des valeurs (K, G) linguistiques des grandeurs de sortie,
- des combinaisons de valeurs des grandeurs (e1, e2) d'entrée et des grandeurs (y) de sortie apparaissant à une phase d'apprentissage étant mesurées, et
- des fonctions d'appartenance pour les valeurs (K, G) linguistiques étant, par un regroupement, positionnées aux points de regroupement des données d'apprentissage mesurées,

caractérisé en ce que

- à une phrase d'exploitation, pour des domaines partiels dans lesquels les valeurs (K, G) linguistiques individuelles sont dominantes, c'est-à-dire dans lesquelles la valeur de vérité d'une valeur (K, G) linguistique est supérieure aux valeurs de vérité des autres valeurs (G, K) linguistiques de la même valeur (e1, e2, y) d'entrée ou de sortie, un contenu de registre d'une mémoire associée à chaque possibilité de combinaison des domaines partiels des diverses grandeurs (e1, e2) d'entrée est augmenté d'un montant chaque fois qu'une combinaison de valeurs mesurées des grandeurs (e1, e2) d'entrée et des grandeurs (y) de sortie tombe dans les domaines partiels de cette possibilité de combinaisons, et
- en une synthèse, les règles élémentaires du système de régulation comportant les possibilités de combinaisons individuelles dans la partie conditionnelle sont déterminées en choisissant comme déduction de la règle la valeur (K, G) linguistique de la grandeur (y) de sortie ayant le plus grand contenu de registre.

2. Procédé suivant la revendication 1, caractérisé en ce que

- le montant de l'augmentation du contenu de registre est rendu égal à la valeur de vérité de la valeur (K, G) linguistique dominante pour la grandeur (y) de sortie associée ou obtenue par sélection de valeurs maximum.

3. Procédé de conception d'un régulateur à logique floue

- comportant au moins une grandeur (x1, x2) d'entrée et une grandeur (y1) de sortie,
- comportant un dispositif pour le traitement par logique floue, dans lequel des valeurs de vérité de valeur (K, M, G) linguistique sont déterminées pour les grandeurs (x1, x2) d'entrée,
- comportant un système de régulation dans lequel des valeurs (K, M, G) linguistiques des grandeurs (y1) de sortie sont déterminées comme déduction pour des combinaisons de valeurs (K, M, G) linguistiques des grandeurs (x1, x2) d'entrée, et
- comportant un dispositif d'éclaircissement, dans lequel les valeurs des grandeurs (y1) de sortie sont déterminées suivant les valeurs de vérité des valeurs (K, M, G) linguistiques des grandeurs (y1) de sortie,

- des combinaisons de valeur des grandeurs (x1, x2, y1) de sortie qui apparaissent à une phase d'apprentissage étant mesurées, et

- des fonctions d'appartenance pour les valeurs (K, M, G) linguistiques étant, par un regroupement, positionnées sur les points de regroupement des données d'apprentissage mesurées,

caractérisé en ce que

- à une phase d'exploitation pour des domaines partiels dans lesquels les valeurs (K, M, G) linguistiques individuelles sont dominantes, c'est-à-dire dans lesquelles la valeur de vérité d'une valeur (K, M, G) linguistique est supérieure aux valeurs de vérité des autres valeurs linguistiques de la même grandeur (x1, x2, y1) d'entrée ou de sortie, un contenu de registre d'une mémoire associée à chaque possibilité de combinaison des domaines partiels des diverses grandeurs (x1, x2) d'entrée est occupé par le minimum des valeurs de vérité des valeurs (K, M, G) linguistiques de cette combinaison si le minimum est supérieur à la valeur entrée jusqu'ici, et

- en une synthèse, les règles élémentaires du système de régulation comportant les possibilités de combinaisons individuelles dans la partie conditionnelle sont déterminées en choisissant comme déduction de la règle la valeur (K, M, G) linguistique de la grandeur (y1) de sortie ayant le plus grand contenu de registre.

4. Procédé suivant l'une des revendications précédentes, caractérisé en ce que le regroupement s'effectue de manière unidimensionnelle.

5. Procédé suivant la revendication 4, caractérisé en ce que

- pour le regroupement, on part de deux regroupements marginaux fixés et d'un nombre prescrit de centres de regroupement libres, d'abord équidistants, sur le domaine de valeurs d'une grandeur (e1, e2, x1, x2) d'entrée ou d'une grandeur (y, y1) de sortie,

- on positionne des fonctions d'appartenance triangulaires de telle manière que les sommets des triangles soient au dessus des centres de regroupement et les pieds dans les centres de regroupement voisins,

- dans un procédé itératif, les données d'apprentissage sont associées les unes après les autres au centre de regroupement le plus proche et le barycentre de tous les points de données appartenant à ce centre de regroupement et déjà traités est àéterminé, et

- le barycentre ainsi calculé est utilisé comme nouveau centre de regroupement lors du traitement du point de données suivant.

6. Procédé suivant l'une des revendications précédentes, caractérisé en ce que les règles élémentaires obtenues lors de la synthèse et ayant une même partie déductive sont, par combinaison de leurs parties conditionnelles à la façon d'une combinaison OU, réunies en une règle compacte.

7. Procédé suivant l'une des revendications précédentes, caractérisé en ce que

- à une phase de test, des grandeurs de sortie calculées par le régulateur à logique floue sont comparées à des grandeurs (y) de sortie mesurées, et

- une réoptimisation par un nombre modifié des valeurs (K, G) linguistiques ou par une forme modifiée des fonctions d'appartenance est effectuée si les écarts dépassent une valeur limite prescrite.

8. Procédé suivant la revendication 7, caractérisé en ce que

- on ne réoptimise que les fonctions d'appartenance des grandeurs (y, y1) ne sortie et

- on minimise la somme des carrés des écarts comme fonction économique d'une optimisation numérique.

9. Régulateur à logique floue qui contient un dispositif pour la mise en oeuvre du procédé suivant l'une des revendications précédentes.

FIG 1

FIG 2

|  | K | G |  |
|---|---|---|---|
| e2 | 24,9 | 13,0 | K |
|  | 186 | 9,0 | G |

e1

y=K

FIG 3

|  | K | G |  |
|---|---|---|---|
| e2 | 1,8 | 624 | K |
|  | 3,0 | 55,1 | G |

e1

y=G

FIG 4

|  | K | G |  |
|---|---|---|---|
| e2 | K | G | K |
|  | K | G | G |

e1

FIG 5

FIG 6